# EUROPEAN PATENT SPECIFICATION

(11) **EP 1 934 096 B1**
(45) Date of publication and mention of the grant of the patent: **25.02.2009**
(21) Application number: 06807071.3
(22) Date of filing: 09.10.2006
(51) Int. Cl.: B64F 1/20

(54) **GLIDE-ANGLE LIGHT FOR APPROACH GUIDANCE OF AIRCRAFT**
GLEITWINKELLICHT FÜR DIE ANFLUGFÜHRUNG EINES FLUGZEUGS
FEU ANGULAIRE DE PLAN D'APPROCHE DESTINE A GUIDER UN AERONEF

(30) Priority: 10.10.2005 DE 102005048908
(43) Date of publication of application: 25.06.2008
(73) Proprietor: SIEMENS AKTIENGESELLSCHAFT, 80333 München (DE)
(72) Inventor: LAENEN, Guy, B-2260 Westerlo (BE); MOONS, Ludo, B-1982 Elewist (BE); TRÉMOUROUX, Pierre, B-1420 Braine-L'Alleud (BE); VANDEVOORDE, Jean-Claude, B-1820 Steenkokkerzeel (BE)
(86) International application number: PCT/EP2006/067178
(87) International publication number: WO 2007/042492

(56) References cited:
- EP-A2- 0 022 667
- GB-A- 1 377 751
- JP-A- 10 012 009
- US-A- 4 707 696
- N.V. ADB S.A.: "Precision Approach Path Indicator (PAPI) A.052.512e" February 1998 (1998-02), , XP002415752 Retrieved from the Internet: URL:http://www.industry.siemens.com/adb/en /productcenter/product_catalogue/approach_ and_papi/a02512/a02512_en.pdf> figure 3

## Description

The invention relates to a glide-angle light for approach guidance of aircraft, as claimed in the precharacterizing clause of patent claim 1.

The final approach of aircraft to an airfield is assisted with the aid of instrument landing systems. This is achieved on the one hand by means of narrow-beam radio guidance beams, which are emitted from radio beacons and allow monitoring of whether an aircraft is on a horizontal and vertical glidepath with respect to the landing runway. On the other hand, visual approach glide-angle indicators provide the pilot with information allowing him to carry out the landing approach with very high accuracy and safety. So-called PAPI systems (PAPI = Precision Approach Path Indicator) such as these comprise a number of glide-angle lights which are arranged alongside the landing runway at a predetermined distance behind the landing runway threshold, with this distance being dependent on the position of the ILS glide-angle antenna, of the approach glide angle, on the gradient of the take-off/landing runway, and on the types of aircraft landing, and may be between 200 m and 600 m. A glide-angle light has a slot which appears to the pilot to be red within a narrow glide angle, and appears to white from a greater height. A pilot can use the visible colors of the glide-angle light to decide whether his altitude is correct, too low or too high. The required functions and characteristics of PAPI systems are described in the standardization regulations of the International Civil Aviation Organization ICAO, Annex 14, Volume I, paragraphs 5.3.5.23 to 5.3.5.45, and the Federal Aviation Association FAA, Specification AC 150/5345-28D.

The German product specification "Präzisions-Anflug-Gleitwinkelfeuer (PAPI) 5NP3: A.02.512d", [Precision Approach Glide-Angle Light], Order No. E1001-T95-A62-V1, published in 1995 by Siemens AG discloses an approach glide-angle light whose housing comprises two or three light channels, depending on the embodiment. Each light channel has an optical axis along which a light source, a colored filter and a lens arrangement are arranged. The light beam, which is split into different colors, emerges from the housing through a closure glass on the front face. The housing is erected on four aluminum appliance feet. The height of each appliance foot can be adapted by means of a fine adjustment apparatus, which is fitted to a threaded rod, and comprises a 2" tube with a breakable coupling, which is attached to a concrete base by means of a flange. The optical axis passes through the closure glass at a light outlet level in the range from 40 cm to 100 cm, and its angle to the horizontal is 3° to 4°. The standard conformity is achieved with this known glide-angle light by means of a complex design, which, in particular, is costly.

EP 0 022 667 A2 discloses a lighting unit for a glide path lighting system comprising a light source, a lens, and a coloured interference filter part way across the light path between the light source and the lens, arranged so as to produce a light beam having a white part, a coloured part and a transition region. The filter is inclined at an angle of approximately 6° to a plane normal to the optical axis of the unit.

The patent abstract of Japan JP 10012009 discloses an approach angle indicating lamp having a light source installed on a support, a red filter installed on the optical axis of the light source via a piezoelectric actuator, and a lens for focusing the light passing through the filter.

US 4,707,696 discloses a glide slope indicator for facilitating aircraft landings comprising a housing having an optical window and a pair of light sources, e.g. two incandescent bulbs. The bulbs are housed within respective chambers defined within the housing by partitions to isolate bulbs from each other to avoid interference between light emitted from the two bulbs. One bulb is emitting a first blinking light beam while the other bulb emits a second steady light beam. The optical axes of the light beams show different angles.

GB 1 377 751 discloses a portable landing aid for guiding aircraft, in particular helicopters, to landing areas which are surrounded by uneven terrain by night. A beacon includes an electric lamp with an optical system including a projection lens, a transparent screen and condenser means, for directing the light from the lamp through the screen to the projection lens. The screen has areas of different colours to produce a beam of light having portions of different colours of predetermined angular extent. The main framework of the beacon consist of a lower portion which affords a channel section and two vertical side walls, and an upper portion containing a cylindrical barrel in its uppermost region and having two side walls. The barrel contains the optical arrangement for producing the beam of light.

The invention is thus based on the object of providing a glide-angle light of the type mentioned initially which complies with the relevant standard regulations but is more economic than in the prior art.

According to the invention, the object is achieved by a glide-angle light of this generic type having the characterizing features of patent claim 1. Since only a single light channel is arranged in the housing of the glide-angle light, this saves costly optical components, thus allowing less costly design of the glide-angle light. In particular, the colored filter for splitting the light beam into a filtered beam component and an unfiltered beam component, and the lens arrangement for focused emission of the light beam, are required only once. The optical adjustment of a glide-angle light according to the invention is advantageously made considerably easily by the reduction in the number of light channels. Furthermore, the size and weight of the glide-angle light are reduced, thus leading to simpler handling during installation. The smaller housing size also offers a smaller area for the wind caused by natural air flows and those caused by aircraft to act on.

In one preferred refinement of the glide-angle light according to the invention, a plurality of halogen lamps are provided as the light source. By way of example, three 105W halogen lamps can be aligned in the direction of the colored filter aperture, which is the form of a slot, in order to produce the light intensity that is required in accordance with the standard. Halogen lamps such as these are commercially available, thus reducing the procurement and maintenance costs.

In one advantageous embodiment of the glide-angle light according to the invention, the halogen lamps are pre-focused and have a reflector. This results in a high yield of the light energy which is emitted from the halogen lamps for the light beam.

In one preferred embodiment of the glide-angle light according to the invention, the housing is supported on less than three legs. Because of the lighter weight and the smaller housing dimensions of the glide-angle light according to the invention, it is possible to erect it, for example, on two legs and, overall, this leads to a further cost reduction without any loss of stability.

In one advantageous refinement of the glide-angle light according to the invention, one leg comprises a tubular part, a head part for supporting and attachment of the housing and a foot part for supporting and attachment to a base, with the head part and/or the foot part being arranged so that it can be moved along the tubular part, and being lockable by means of attachment elements which engage in axially running grooves in the tubular part. The tubular part may advantageously be in the form of an extruded profile which has grooves which extend in a T-shape towards the tube center. The head part and/or foot part have a corresponding hole, through which the tubular part can be passed. Radially aligned attachment elements are arranged on the circumference of the head part and/or foot part, extend into the T-shaped grooves and are enclosed in an interlocking manner by them. During locking of the attachment elements, they are stressed against shoulder surfaces of the grooves. After releasing the attachment elements, the head part and/or foot part can be pushed along the tubular part, in order to adjust the height of the housing with respect to the ground. The tubular configuration of the legs, with grooves, results in high stability and makes it possible to reduce the number of legs.

In a further preferred refinement of the glide-angle light according to the invention, the foot part and the head part are physically identical. This reduces the range of components, thus further reducing the production cost and the total costs for a glide-angle light according to the invention.

In a further advantageous embodiment of the glide-angle light according to the invention, the grooves and the attachment elements are arranged in a rotationally symmetrical distributed form. By way of example, six attachment elements are distributed around the circumference of each head or foot part and are each separated by an angle of 60° from one another, thus allowing uniform attachment to the tubular part.

In a further preferred embodiment of the glide-angle light according to the invention, a tubular part has a cross-sectional constriction in the area of the foot part. The cross-sectional constriction results in a defined weak point with predeterminable fracture characteristics, which is already integrated in the tubular part - that is to say it is provided without any additional breakable coupling. In the configuration of the tubular parts which is provided with grooves, the cross-sectional constriction can be produced well in a reproducible manner.

In a further advantageous refinement of the glide-angle light according to the invention, the colored filter splits the light beam vertically. This special feature of a glide-angle light according to the invention with a single light channel makes it possible to provide azimuth approach guidance. A combination of glide-angle lights with the normal horizontal beam splitting and the capability that is now also possible for vertical beam splitting allows optical visualization of both the horizontal and vertical glidepath angles. Details and further advantages of the glide-angle light according to the invention are described in more detail in the following text with reference to the drawings, in which:
- FIG 1: shows a side view with a housing longitudinal section,
- FIG 2: shows a cross section through a tubular part of a leg,
- FIG 3: shows a plan view of the open housing, in each case of a glide-angle light according to the invention,
- FIG 4: shows a diagram with isocandela lines,
- FIG 5: shows a diagram of the vertical light intensity distribution,

### illustrated schematically.

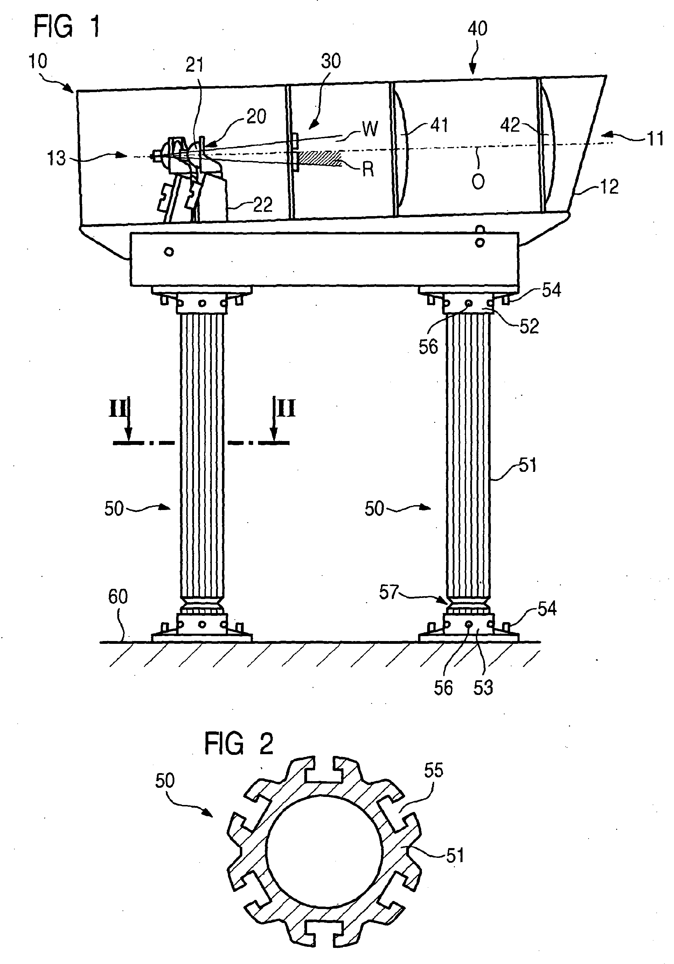

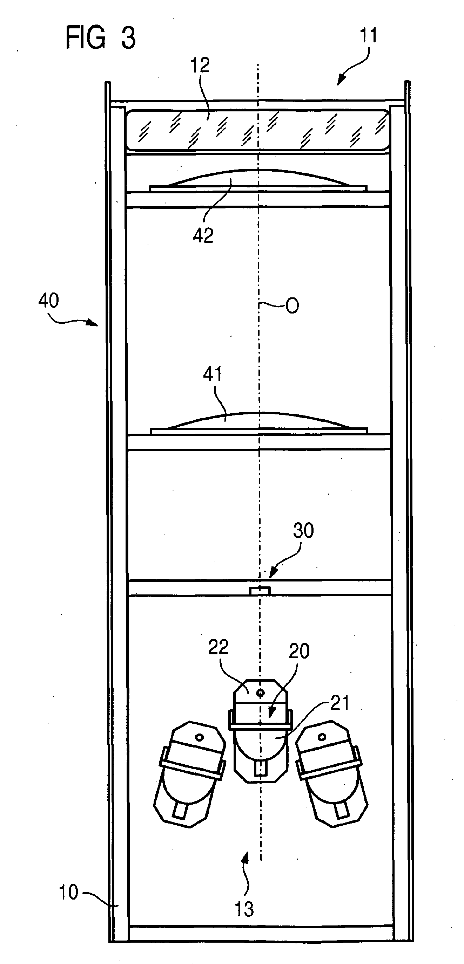

As shown in Figure 1 and Figure 3, a glide-angle light according to the invention for approach guidance for aircraft comprises a housing 10 which is formed from folded sheet aluminum and has a base wall, two side walls, a rear wall and a removable cover. The front face of the housing 10 is in the form of a light outlet opening 11 and is closed by a front glass 12. According to the invention, only a single light channel 13 extends along an optical axis O in the housing 10. A light source 20, a colored filter 30 and a lens arrangement 40 are arranged one behind the other along the optical axis O. A grouping of three halogen lamps, symmetrically with respect to the optical axis O, is used as the light source 20, producing a white light beam which is directed at the colored filter 30. The colored filter 30 is preferably arranged in combination with a slotted aperture in such a way that the light beam is split into a filtered beam component R and an unfiltered beam component W. The partially filtered light beam now passes through an inner lens 41 and then through an outer lens 42 before leaving the glide-angle light through the light outlet opening 11. The restriction to a single light channel 13 saves optical components in comparison to the prior art, thus leading to a considerable cost reduction for the glide-angle light according to the invention. Furthermore, this makes it possible to reduce the size of the housing 10, which on the one hand improves the handling capability for installation purposes and on the other hand reduces the area on which wind caused by natural air flows and aircraft can act.

Three commercially available 105W halogen lamps are used as the light source, are pre-focused and already have a reflector 21. The halogen lamps 20 are mounted on holders 22, which are mounted on the bottom wall of the housing 10. The tandem arrangement of the lenses 41, 42, which are composed of optical glass, ensures a very sharply imaged transition from the filtered beam component R to the unfiltered beam component W, which no longer occupies more than three minutes of arc over the entire beam width. The front glass 12 protects the outer lens 42 against flying sand and can be provided with anti-condensation treatment.

Normally, the transition line formed by the colored filter 30 is arranged horizontally, so that the upper, unfiltered beam component W is white, and the lower, filtered beam component R is red. A glide-angle light designed in this way is intended for vertical or polar approach guidance. Alternatively, the colored filter 30 may, however, also be rotated through 90°, that is to say it may be arranged vertically, so that the beam is split into a left-hand and right-hand beam component. This allows the use of a glide-angle light according to the invention for horizontal or azimuth approach guidance.

The lighter weight and the smaller dimensions of the housing 10 of a glide-angle light according to the invention allow the housing 10 to be erected on less than three legs 50, in the illustrated exemplary embodiment on two legs 50. Each leg 50 has a head part 52 at its upper end, and a physically identical foot part 53 at its lower end. A lower structure of the housing 10 is supported on the head parts 52, to which the head parts 52 are connected by means of connecting means 54 in the form of screw connections. The entire glide-angle light is supported via the foot parts 53 on a base 60 which is in the form of a concrete foundation and to which they are fixed by means of connecting means 54. The head parts 52 and foot parts 53 are pushed over the ends of the tubular part 51 of the leg 50, and are attached to it by means of attachment elements 56. The attachment elements 56 are arranged distributed in a rotationally symmetrical form around the tubular part 51 for uniform attachment and, for example, are in the form of screw connections. In this case, a screw head projects outwards from the head part 52 or foot part 53, and engages via a threaded bolt with a nut which is located in an axial groove 55. As can be seen from Figure 2, the grooves 55 have a cross section which widens radially inwards in a T-shape, and in which the nut can be moved axially, but can be moved radially only to a limited extent. During locking of the attachment element 56, the screw head is braced from the outside against the head part 52 or foot part 53, while the nut is supported on the shoulder surfaces of the T-shaped groove constriction. In the area of the foot parts 53, the tubular parts 51 of the legs 50 have a cross-sectional constriction 57, which forms a defined weak point. Overall, this results in a leg structure whose cost is low as a result of the use of physically identical components, and which has better fracture characteristics with less resistance to being knocked in. In comparison to the prior art, there is also no need for integration of adjustment devices for the alignment of the optical axis O, thus further reducing the costs of the glide-angle light according to the invention. Instead of this, a single set of adjustment tools can be used for a large number of glide-angle lights arranged on an airfield, thus conserving these tools, which are used to a lesser extent.

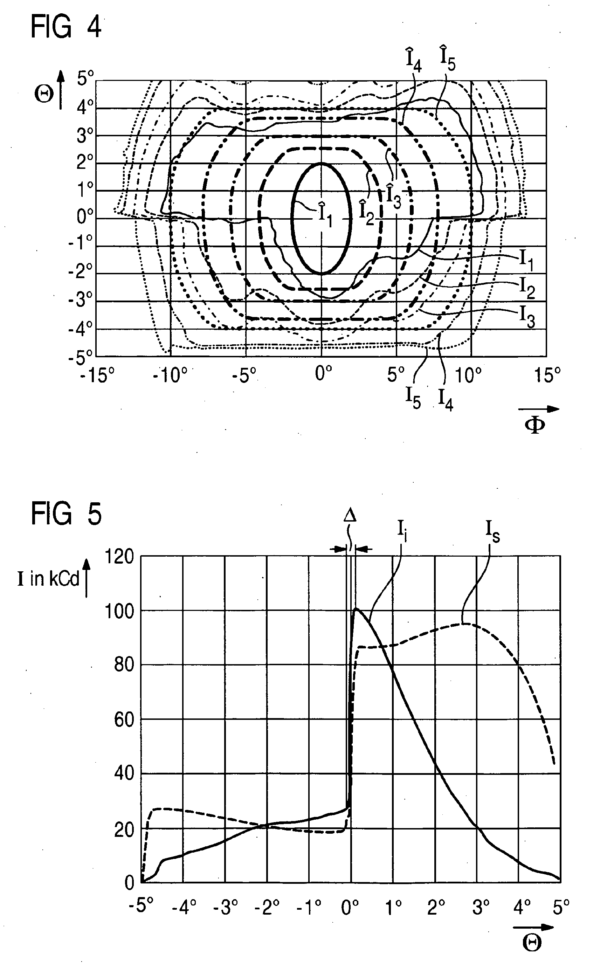

The glide-angle light according to the invention with only one light channel 13 complies with the photometric stipulations in the relevant standards. Figure 4 shows the distribution of the light intensity of a glide angle light according to the invention in a range from -15° to +15° of the azimuth angle Φ and in a range from -5° to +5° of the elevation angle Θ, in each case with respect to the optical axis O. The standard specifies lines of constant light intensity, so-called isocandela lines, within which the light intensity must be at least equal to the value of the isocandela line. In this case, the figure shows the isocandela lines Î₁ = 15000Cd, Î₂ = 10000Cd, Î₃ = 7000Cd, Î₄ = 4000Cd and Î₅= 2500Cd. Using the same type of line, but with a thinner line, Figure 4 shows the corresponding measured isocandela lines I₁, I₂, I₃, I₄ and I₅. Since each measured isocandela line In in each case surrounds the isocandela line Îₙ in accordance with the standard reference completely, the respectively required minimum light intensity is satisfied. In this case, the half of a measured isocandela line Iₙ located in the region Θ < 0° is denser at the reference isocandela line Îₙ than in the region Θ > 0°. The reduced light intensity in the region of negative elevation angle Θ is due to the red filtering of this beam component.

Figure 5 shows the profile of the light intensity I over a range from. -5° to +5° for the elevation angle Θ. The profile of the light intensity Iᵢ of a glide-angle light according to the invention and the light intensity Iₛ of a glide-angle light according to the prior art are compared. On the one hand, in the region where Θ ~ 0°, it can be seen that the transition angle Δ between the unfiltered white beam component W and the filtered red beam component R is, as specified, less than three minutes of arc. One particular advantage of halogen lamps with a reflector is an improvement in the effect of the colored filter 30 as a result of thermal effects, which is evident in an increase in the light intensity in the elevation angle range between -2° and +1°. Particularly in this elevation angle range, a bright signal emission from the glide-angle light is particularly important, since this corresponds to the viewing angle of aircraft pilots who are approaching on the glidepath. The transition angle Δ is, apart from this, also less than in the case of glide-angle lights according to the prior art.

## Claims

1. A glide-angle light for approach guidance of aircraft, comprising a housing (10) with a light outlet opening (11) in which a light channel (13) with an optical axis (O) is arranged, along which a light source (20) for production of a light beam, a colored filter (30) for splitting the light beam into a filtered beam component (R) and an unfiltered beam component (W) and a lens arrangement (40) for focused emission of the light beam (R, W) through the light outlet opening (11) are arranged,
**characterized in that** only a single light channel (13) is arranged in the housing (10), and **in that** a plurality of halogen lamps are provided as the light source (20).

2. The glide-angle light as claimed in claim 1,
**characterized in that** the halogen lamps (20) are pre-focused and have a reflector (21).

3. The glide-angle light as claimed in one of claims 1 or 2,
**characterized in that** the housing (10) is supported on less than three legs (50).

4. The glide-angle light as claimed in claim 3,
**characterized in that** one leg (50) comprises a tubular part (51), a head part (52) for supporting and attachment of the housing (10) and a foot part (53) for supporting and attachment to a base (60), with the head part (52) and/or the foot part (53) being arranged so that it can be moved along the tubular part (51), and being lockable by means of attachment elements (56) which engage in axially running grooves (55) in the tubular part (51).

5. The glide-angle light as claimed in claim 4,
**characterized in that** the foot part (53) and the head part (52) are physically identical.

6. The glide-angle light as claimed in claim 4 or 5,
**characterized in that** the grooves (55) and the attachment elements (56) are arranged in a rotationally symmetrical distributed form.

7. The glide-angle light as claimed in one of claims 4 to 6,
**characterized in that** a tubular part (51) has a cross-sectional constriction (57) in the area of the foot part (53).

8. The glide-angle light as claimed in one of claims 1 to 7,
**characterized in that** the colored filter (30) splits the light beam vertically.

## Patentansprüche

1. Gleitwinkelfeuer zur Anflughilfe für ein Flugzeug, umfassend ein Gehäuse (10) mit einer Lichtauslaßöffnung (11), worin ein Lichtkanal (13) mit einer optischen Achse (0) angeordnet ist, entlang der eine Lichtquelle (20) zum Produzieren eines Lichtstrahls, ein Farbfilter (30) zum Aufteilen des Lichtstrahls in eine gefilterte Strahlkomponente (R) und eine ungefilterte Strahlkomponente (W) und eine Linsenanordnung (40) zur fokussierten Emission des Lichtstrahls (R, W) durch die Lichtauslaßöffnung (11) angeordnet sind,
**dadurch gekennzeichnet, daß** nur ein einziger Lichtkanal (13) in dem Gehäuse (10) angeordnet ist und daß eine Vielzahl von Halogenlampen als die Lichtquelle (20) vorgesehen ist.

2. Gleitwinkelfeuer nach Anspruch 1, **dadurch gekennzeichnet, daß** die Halogenlampen (20) vorfokussiert sind und einen Reflektor (21) aufweisen.

3. Gleitwinkelfeuer nach einem der Ansprüche 1 oder 2, **dadurch gekennzeichnet, daß** das Gehäuse (10) auf weniger als drei Beinen (50) gehalten wird.

4. Gleitwinkelfeuer nach Anspruch 3, **dadurch gekennzeichnet, daß** ein Bein (50) folgendes umfaßt: einen röhrenförmigen Teil (51), einen Kopfteil (52) zum Halten und zur Anbringung des Gehäuses (10) und einen Fußteil (53) zum Halten und zur Anbringung an einer Basis (60), wobei der Kopfteil (52) und/oder der Fußteil (53) so angeordnet ist, daß er entlang dem röhrenförmigen Teil (51) bewegt werden kann und mittels Anbringungselementen (56), die in axial verlaufende Rillen (55) in dem röhrenförmigen Teil (51) eingreifen, verriegelbar ist.

5. Gleitwinkelfeuer nach Anspruch 4, **dadurch gekennzeichnet, daß** der Fußteil (53) und der Kopfteil (52) physisch identisch sind.

6. Gleitwinkelfeuer nach Anspruch 4 oder 5, **dadurch gekennzeichnet, daß** die Rillen (55) und Anbringungselemente (56) in einer rotationssymmetrischen verteilten Form angeordnet sind.

7. Gleitwinkelfeuer nach einem der Ansprüche 4 bis 6, **dadurch gekennzeichnet, daß** ein röhrenförmiger Teil (51) in dem Bereich des Fußteils (53) eine Querschnittsverengung (57) aufweist.

8. Gleitwinkelfeuer nach einem der Ansprüche 1 bis 7, **dadurch gekennzeichnet, daß** das Farbfilter (30) den Lichtstrahl vertikal aufteilt.

## Revendications

1. Feu d'angle d'approche pour le guidage en approche d'un aéronef, comprenant un boîtier (10) ayant une ouverture (11) de sortie de la lumière dans laquelle est disposé un canal (13) pour de la lumière ayant un axe (0) optique le long duquel sont disposés une source (20) lumineuse de production d'un faisceau lumineux, un filtre (30) coloré pour séparer le faisceau lumineux en une composante (R) de faisceau filtré et en une composante (W) de faisceau non filtré et un dispositif (40) à lentille pour l'émission focalisée du faisceau (R, W)lumineux passant dans l'ouverture (11) de sortie de la lumière,
**caractérisé en ce que** seulement un seul canal (13) pour de la lumière est disposé dans le boîtier (10) et **en ce qu'**une pluralité de lampes aux halogènes sont prévues en tant que source (20) lumineuse.

2. Feu d'angle d'approche suivant la revendication 1,
**caractérisé en ce que** les lampes (20) aux halogènes sont préfocalisées et ont un réflecteur (21).

3. Feu d'angle d'approche suivant l'une des revendications 1 ou 2,
**caractérisé en ce que** le boîtier (10) est supporté sur moins de trois jambes(50).

4. Feu d'angle d'approche suivant la revendication 3,
**caractérisé en ce qu'**une jambe (50) comprend une partie (51) tubulaire et une partie (52) de tête pour supporter et fixer le boîtier (10) et une partie (53) de pied pour support et fixation à un socle (60), la partie (52) de tête et/ou la partie (53) de pied étant disposée de manière à pouvoir être déplacée le long de la partie (51) tubulaire et de manière à pouvoir être verrouillée au moyen d'éléments (56) de fixation, qui pénètrent dans des rainures (55) axiales de la partie (51) tubulaire.

5. Feu d'angle d'approche suivant la revendication 4,
**caractérisé en ce que** la partie (53) de pied et la partie (52) de tête sont identiques physiquement.

6. Feu d'angle d'approche suivant la revendication 4 ou 5,
**caractérisé en ce que** les rainures (55) et les éléments (56) de fixation sont disposés sous une forme répartie symétriquement en rotation.

7. Feu d'angle d'approche suivant l'une des revendications 4 à 6,
**caractérisé en ce qu'**une partie (51) tubulaire a un resserrement (57) de section transversale dans la zone de la partie (53) de pied.

8. Feu d'angle d'approche suivant l'une des revendications 1 à 7,
**caractérisé en ce que** le filtre (31) coloré divise le faisceau lumineux verticalement.
